(19) Europäisches Patentamt
European Patent Office
Office européen des brevets

(11) **EP 3 504 932 B1**

(12) **FASCICULE DE BREVET EUROPEEN**

(45) Date de publication et mention
de la délivrance du brevet:
**12.08.2020 Bulletin 2020/33**

(21) Numéro de dépôt: **17768181.4**

(22) Date de dépôt: **24.08.2017**

(51) Int Cl.:
**H04L 12/24** *(2006.01)*      **H04W 24/04** *(2009.01)*
**H04W 4/70** *(2018.01)*      **H04W 88/16** *(2009.01)*

(86) Numéro de dépôt international:
**PCT/FR2017/052275**

(87) Numéro de publication internationale:
**WO 2018/042110 (08.03.2018 Gazette 2018/10)**

(54) **PROCÉDÉ DE CONTRÔLE DE LA CHARGE D'UNE PASSERELLE DE CONCENTRATION DE DONNÉES POUR UN RÉSEAU DE COMMUNICATION SANS FIL**

VERFAHREN ZUR STEUERUNG DER LAST EINES DATENKONZENTRATIONSGATEWAYS FÜR EIN DRAHTLOSKOMMUNIKATIONSNETZWERK

METHOD FOR CONTROLLING THE LOAD OF A DATA CONCENTRATION GATEWAY FOR A WIRELESS COMMUNICATION NETWORK

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2016 FR 1658015**

(43) Date de publication de la demande:
**03.07.2019 Bulletin 2019/27**

(73) Titulaire: **Kerlink**
**35235 Thorigne-Fouillard (FR)**

(72) Inventeurs:
• **DUBOURG, Ronan**
**35530 Noyal Sur Vilaine (FR)**
• **DELIBIE, Yannick**
**35235 Thorigne-Fouillard (FR)**

(74) Mandataire: **Loyer & Abello**
**9, rue Anatole de la Forge**
**75017 Paris (FR)**

(56) Documents cités:
**FR-A1- 3 032 849     US-A1- 2015 327 152**

• **Lora Alliance ET AL: "A technical overview of LoRa What is it?", , 31 mai 2016 (2016-05-31), XP055326494, Extrait de l'Internet: URL:http://www.semtech.com/wireless-rf/iot /LoRaWAN101_final.pdf [extrait le 2016-12-06]**
• **SO JAEYOUNG ET AL: "LoRaCloud: LoRa platform on OpenStack", 2016 IEEE NETSOFT CONFERENCE AND WORKSHOPS (NETSOFT), IEEE, 6 juin 2016 (2016-06-06), pages 431-434, XP032917859, DOI: 10.1109/NETSOFT.2016.7502471**

## Description

## Domaine technique

L'invention se rapporte au domaine des procédés et dispositifs pour communiquer par radio des données, notamment dans le domaine de l'Internet des objets. Plus particulièrement, l'invention se rapporte au domaine des passerelles de concentration de données pour un réseau de communication sans fil et de leur contrôle.

## Arrière-plan technologique

L'internet des objets consiste à permettre à des objets du quotidien de communiquer automatiquement des données avec un réseau sans-fil. Par exemple, un compteur d'eau équipé d'un module de communication peut automatiquement communiquer un relevé d'eau à l'entreprise de gestion de la facturation de la consommation d'eau.

Le document US2015/327152 A1 décrit un dispositif de communication et un procédé de contrôle de dispositif de communication.

Des passerelles, également appelées stations de base, ont pour rôle d'assurer la réception et l'émission radio de données en provenance et à destination des module de communication présents dans leur zone de couverture ainsi que de relayer ces données à des équipements en charge de les traiter, par exemple des serveurs accessibles sur un réseau basé sur le protocole IP (« Internet Protocol »).

Plusieurs technologies d'accès radio sont disponibles pour la mise en œuvre de réseaux de modules de communication. On peut citer à titre purement illustratif et non limitatif les technologies LoRa™, Sigfox™ ou encore WM-Bus (de l'anglais « *Wireless Meter Bus* »), qui reposent notamment sur des types de modulation différents.

Ces technologies ont en commun de proposer des communications longue distance (dites « long range » en anglais) qui permettent de diminuer le nombre de passerelles en augmentant la couverture de celles-ci.

Cependant, la communication entre d'une part les modules de communication et la passerelle et, d'autre part, la passerelle et les équipements distants chargés de traiter les données transitant par la passerelle reposent sur des protocoles de communication distincts. La passerelle doit donc démoduler les signaux qu'elle reçoit en provenance des différents modules de communication présents dans son rayon de couverture avant de transmettre les informations correspondantes aux différents équipements distants concernés. Pour cela, ces signaux sont traités par différents démodulateurs intégrés à la passerelle. La quantité de signaux que peut traiter simultanément une passerelle dans de bonnes conditions est cependant limitée par le nombre de démodulateurs qu'elle comporte. Or, le nombre de signaux à traiter simultanément par la passerelle peut varier dans le temps. Il existe donc un besoin pour un procédé de contrôle de la charge d'une passerelle.

## Résumé

L'invention permet de répondre à ce besoin.

Pour cela, l'invention fournit un procédé de contrôle de la charge d'une passerelle de concentration de données pour un réseau de communication sans fil, le procédé comportant

- recevoir une pluralité de signaux de données depuis une pluralité de dispositifs clients distants,

- fournir une date de début de communication de chaque signal de données reçu,

- sélectionner un signal de données reçu,

- déterminer une date de fin de communication de chaque signal de données reçu,

- déterminer un nombre des signaux de données reçus par la passerelle qui présentent une date de fin de communication comprise entre la date de début de communication du signal de données sélectionné et la date de fin de communication du signal de données sélectionné,

- comparer ledit nombre des signaux de données à un nombre seuil et

- émettre un signal d'alarme en réponse à la détection que ledit nombre de signaux de données est supérieur au nombre seuil.

Grâce à ces caractéristiques, une alarme est émise dès lors que la charge de la passerelle dépasse un nombre seuil de signaux traités simultanément. Ces caractéristiques permettent donc de contrôler que la charge de la passerelle ne dépasse pas un seuil prédéterminé.

Selon d'autres modes de réalisation avantageux, un tel procédé de contrôle de la charge d'une passerelle de concentration de données peut présenter une ou plusieurs des caractéristiques suivantes :

Selon un mode de réalisation, la passerelle comporte une pluralité de démodulateurs, chaque démodulateur de la passerelle étant configuré pour démoduler des signaux de données reçus par la passerelle, le procédé comportant en outre une étape de démodulation de la pluralité de signaux de données par les démodulateurs.

Selon un mode de réalisation, le nombre seuil correspond au nombre de démodulateurs de la passerelle. Ainsi, le procédé de contrôle permet de contrôler que le nombre de signaux traités simultanément par la passerelle n'excède pas le nombre de démodulateurs pouvant traiter lesdits signaux de données.

Selon un mode de réalisation, la passerelle comporte une interface de communication radio configurée pour recevoir la pluralité de signaux de données sans fil, l'interface de communication radio étant connectée aux démodulateurs, le procédé comportant une étape de transmission de chacun des signaux de données reçus par l'interface de communication à un démodulateur respectif.

Selon un mode de réalisation, la passerelle comporte en outre une antenne de réception des signaux.

Selon un mode de réalisation, l'antenne de réception est configurée pour recevoir des signaux de données à une fréquence comprise dans le groupe de fréquences de 433MHz, 868MHz et 915MHz.

Selon un mode de réalisation, chaque signal de données est une trame d'un protocole de communication choisi parmi la technologie LoRa, la technologie Sigfox et la technologie WM-BUS.

Selon un mode de réalisation, déterminer la date de fin de communication de chaque signal de données reçu comporte, pour chaque signal de données reçu :

- déterminer une longueur de la trame correspondant audit signal de données reçu, et
- calculer la date de fin de communication de la trame correspondant audit signal de données reçu en fonction de ladite longueur de trame et d'un débit de données d'un canal radio par lequel ledit signal de données a été reçu.

Selon un mode de réalisation, la passerelle comporte une horloge interne apte à fournir une donnée d'horodatage correspondant à la date de début de communication de chaque signal de données reçu.

Selon un mode de réalisation, le procédé de contrôle comporte en outre stocker la date de fin de communication de chaque signal de données de la pluralité de signaux de données dans une mémoire de la passerelle.

Selon un mode de réalisation, le procédé de contrôle de la passerelle comporte en outre :

- recevoir des données de synchronisation d'un dispositif distant connecté à la passerelle,

- synchroniser l'horloge interne de la passerelle en fonction des données de synchronisation.

Selon un mode de réalisation, l'invention fournit également une passerelle de concentration de données pour un réseau de communication sans fil comportant un ensemble de dispositifs clients distants émetteurs de signaux de données, la passerelle de concentration comportant :

- une interface de communication radio configurée pour recevoir des signaux de données radio depuis l'ensemble des dispositifs clients,

- une pluralité de démodulateurs configurés pour démoduler les signaux de données reçus par l'interface de communication,

- une unité de contrôle configurée pour exécuter le procédé de contrôle ci-dessus.

Selon un mode de réalisation, la passerelle de concentration comporte en outre une interface réseau connectée à un réseau distant et configurée pour transmettre les signaux de données démodulés.

Selon un mode de réalisation, la passerelle comporte en outre une alarme configurée pour envoyer un signal de données d'alarme à un dispositif de gestion de passerelle connecté à la passerelle. Un tel dispositif de gestion de passerelle est par exemple connecté à la passerelle via le réseau distant. Un tel dispositif de gestion de passerelle peut être connecté à une pluralité de passerelles.

Certains aspects de l'invention partent de l'idée de fournir un procédé de contrôle de la charge d'une passerelle. Certains aspects de l'invention partent de l'idée d'émettre une alarme en cas de détection d'une surcharge de la passerelle. Certains aspects de l'invention partent de l'idée de déterminer le nombre de signaux de données traités simultanément par la passerelle. Certains aspects de l'invention partent de l'idée de contrôler que le nombre de signaux de données reçus et traités simultanément par la passerelle n'excède pas le nombre de démodulateurs de la passerelle. Certains aspects partent de l'idée de surveiller la charge de la passerelle pour chaque signal de données reçu par la passerelle.

**Brève description des figures**

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.

- **La figure 1** est une représentation schématique d'une interconnexion entre un réseau sans fil local et un réseau de communication étendu par l'intermédiaire d'une passerelle de concentration ;

- **La figure 2** est une représentation schématique fonctionnelle de la passerelle de concentration de la figure 1 ;

- **La figure 3** est un diagramme de fonctionnement d'un procédé de contrôle de la charge de la passerelle de la figure 2 ;

- **La figure 4** est un graphique illustrant une pluralité de trames reçues par la passerelle de la figure 2 sur une période donnée.

## Description détaillée de modes de réalisation

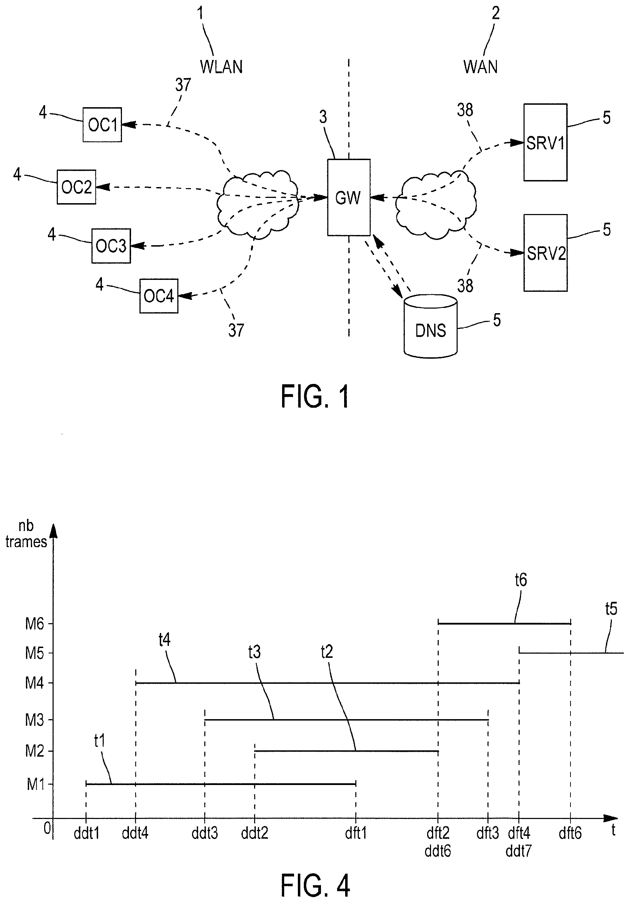

Sur la figure 1, un premier réseau de communication sans-fil local 1 (WLAN pour « Wireless Local Area Network »), ci-après réseau sans fil local 1, est interconnecté à un réseau de communication étendu 2 (WAN pour « Wide Area Network »), par exemple le réseau Internet, au moyen d'une passerelle 3. Cette passerelle 3 comprend des interfaces réseaux lui permettant d'appartenir à la fois au réseau sans fil local 1 et au réseau de communication étendu 2.

Outre la passerelle 3, le réseau sans-fil local 1 comporte un ensemble d'objets communicants 4, de manière illustrative au nombre de quatre sur la figure 1. Ces objets communicant 4 peuvent être par exemple des capteurs sans fil, tels que des compteurs d'eau, de gaz ou autre. Ces capteurs communicants équipés de modules de communication sans fils peuvent ainsi communiquer, en fonction de leurs caractéristiques, des données mesurées, comme par exemple un relevé de compteur d'eau, de gaz ou autre à destination de la passerelle de concentration 3. Ces objets communicants 4 ont la particularité de consommer peu d'énergie, couramment qualifiés de « à basse consommation », et d'utiliser des moyens de communication à très bas débit, par exemple inférieur à 2Kbps.

Les objets communicants 4 fonctionnent majoritairement sur batterie ou pile. Afin d'optimiser leur consommation, les plages de temps durant lesquelles les objets communicants 4 sont aptes à émettre ou recevoir des données sont limitées. En dehors de ces plages d'émission et/ou réception, les objets communicants 4 sont par exemple en état de veille, ce qui leur permet de réduire leur consommation électrique. Dans le cadre de la figure 1, le réseau sans-fil local 1 est par exemple un réseau Zigbee, un réseau LoRa, un réseau bluetooth classique ou Low Energy (Bluetooth Smart) ou tout autre réseau non fondé sur le protocole de communication IP. Ce réseau sans fil local 1 est cependant un réseau adressé, c'est-à-dire que chaque objet communicant 4 peut être identifié de manière unique sur ce réseau local sans fil 1 au moyen d'un identifiant propre, par exemple une adresse MAC (de l'anglais « Media Access Control »).

Le réseau de communication étendu 2 repose pour sa part sur le protocole de communication IP tel que le réseau Internet, un réseau de communication 3G/4G ou autre. Ce réseau de communication étendu 2 comporte, outre la passerelle 3, des équipements distants 5 tels que des serveurs, des serveurs de type DNS (« Domain Name System »), des dispositifs de stockage de base de données ou autre. Chaque équipement distant 5 connecté à ce réseau de communication étendu 2 est identifié par une adresse IP. Les équipements distants 5 sont configurés pour la collecte et le traitement des informations en provenance de tout ou partie des différents objets communicants 4 présents sur le réseau sans fil local 1.

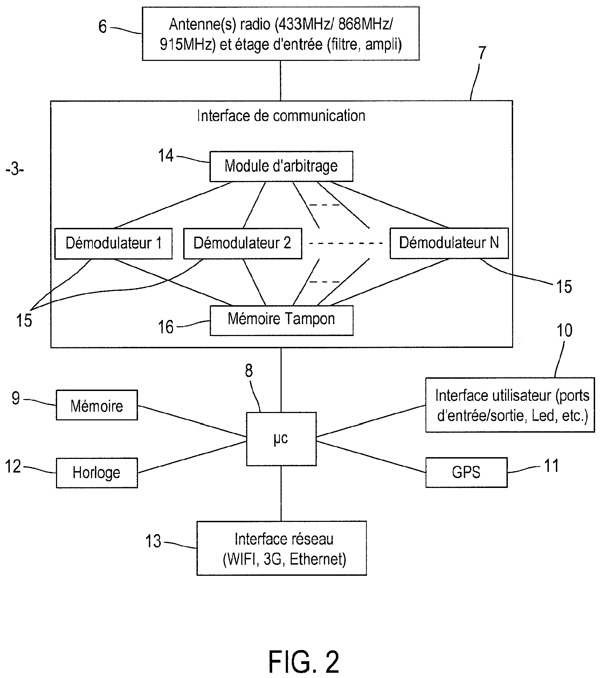

Le réseau sans fil local 1 et le réseau de communication étendu 2 utilisant des protocoles de communication hétérogènes, la passerelle 3 sert d'interface entre les objets communicants 4 et les équipements distants 5. Typiquement, la passerelle 3 joue le rôle de plateforme d'aiguillage afin de véhiculer les données en provenance des objets communicants 4 vers les équipements distants 5 et inversement. La passerelle 3 doit donc disposer d'un mécanisme permettant d'établir des sessions de communication bidirectionnelles d'une part avec chaque objet communicant 4, comme indiqué par les flèches 37, et d'autre part avec les équipements distants 5, comme indiqué par les flèches 38. Un exemple de passerelle 3 permettant d'établir ces communications bidirectionnelles avec les objets communicants 4 et les équipements distants 5 est illustré sur la figure 2.

La passerelle 3 illustrée sur la figure 2 comporte une pluralité de composants. En particulier, la passerelle 3 comporte un module frontal radio 6, un module de traitement en bande de base 7, un microcontrôleur 8, une mémoire interne 9, une interface utilisateur 10, un GPS 11, une horloge 12 et une interface réseau 13.

Le module frontal radio 6 a pour fonction d'émettre et de recevoir des ondes radio vers et en provenance des objets communicants 4. Pour cela, le module frontal radio 6 comporte au moins une antenne radio (non illustrée). Cette antenne radio est destinée à rayonner ou à capter les ondes radio véhiculant les données à échanger avec les objets communicant 4 via un canal de transmission radio. Le module frontal radio 6 peut par exemple communiquer avec les objets communicants 4 sur un canal radio présentant une fréquence de 433MHz, 868MHz ou encore de 915MHz ou autre selon la réglementation en vigueur. Le module frontal radio 6 est connecté au module de traitement en bande de base 7 de la passerelle 3 afin de pouvoir lui transmettre les signaux radio reçus par la passerelle 3 et de recevoir les signaux de données à émettre par la passerelle 3.

Le module de traitement en bande de base 7 de la passerelle 3 a pour fonction de préparer les signaux de données reçus par la passerelle 3 pour leur traitement par le microcontrôleur 8. Pour cela, le module de traitement en bande de base 7 comporte un module d'arbitrage 14, une pluralité de démodulateurs 15 et une mémoire tampon 16.

Le module d'arbitrage 14 reçoit l'ensemble des signaux de données en provenance du module frontal radio 6. Le module d'arbitrage 14 est connecté à l'ensemble des démodulateurs 15. Le module d'arbitrage 14 distribue les signaux de données reçus par la passerelle 3 aux démodulateurs 15. Cette distribution des signaux de données reçus par la passerelle peut être réalisée selon de nombreux critères de distribution. Cette distribution peut par exemple être réalisée en fonction de la disponibilité des démodulateurs 15, du débit des signaux de données, des canaux de communication radio, de l'intensité des signaux de données ou autre.

Le module d'arbitrage 14 est apte à détecter simultanément une pluralité d'entêtes des paquets à démoduler, y compris dans le cadre de signaux de données reçus à des débits distincts. Cependant, chaque démodulateur ne peut démoduler qu'un seul paquet à la fois. Ainsi, le nombre de paquets pouvant être démodulés simultanément par la passerelle 3 est limité par le nombre de démodulateurs 15 intégrés à la passerelle 3.

Les démodulateurs 15 intégrés dans le module de traitement en bande de base 7 peuvent présenter des caractéristiques distinctes, et en particulier des caractéristiques de programmabilité distinctes en fonction des besoins.

Ainsi, dans une première variante, un démodulateur 15 peut être configurable pour utiliser une fréquence donnée parmi une pluralité de fréquences autorisées. La bande passante de démodulation du démodulateur 15 peut par exemple être configurée à 125, 250 ou 500 kHz. Le débit autorisé par le démodulateur 15 peut également être configuré à n'importe quel débit parmi une pluralité de débits disponibles. Cependant seul un signal de données présentant le débit sur lequel est effectivement configuré ledit démodulateur 15 sera démodulé. Un tel démodulateur 15 configurable est de préférence destiné à servir de liaison haut débit vers d'autres passerelles ou équipements distants 5.

Dans une seconde variante, le démodulateur 15 peut être prévu pour fonctionner avec une bande passante qui ne peut être ni modifiée ni configurée, par exemple une bande passante prédéfinie de 125 kHz. Le débit d'un démodulateur 15 selon cette seconde variante reste cependant adaptable de sorte que les démodulateurs 15 selon cette seconde variante peuvent recevoir des signaux à différents débits sans configuration préalable. Les démodulateurs 15 selon cette seconde variante sont de préférence dédiés à l'utilisation dans un réseau en étoile comportant un grand nombre d'objets communicants 4. De préférence, les objets communicants 4 situés près de la passerelle 3 vont utiliser un débit maximum possible dans la bande passante fixée de 125kHz (par exemple de l'ordre de 6kbit/s) alors que les objets communicants 4 éloignés de la passerelle 3 vont utiliser un débit inférieur (descendant jusqu'à 300bit/sec, ce qui correspond au débit LORA minimum pour un canal à 125kHz).

De préférence, les objets communicants 4 peuvent changer de fréquence d'émission pour chaque transmission, permettant ainsi une adaptation du débit dynamique selon la configuration de leur liaison sans ajouter de complexité. En outre, il n'est pas nécessaire de mettre à jour une table des débits utilisés par les différents objets communicants 4 car tous les débits sont démodulés en parallèle par le module de traitement en bande de base 7.

Chaque paquet démodulé par un démodulateur 15 est associé à des métadonnées. Ces métadonnées sont détectées par le module de traitement en bande de base 7. Ces métadonnées comportent la date de début de transmission du paquet, la longueur du paquet ainsi que le débit de transmission du paquet. Le paquet démodulé et les métadonnées associées sont stockés dans la mémoire tampon 16 du module de traitement en bande de base 7. Le module de traitement en bande de base 7 est connectée au microcontrôleur 8 de la passerelle 3 de manière à ce que le microcontrôleur 8 de la passerelle 3 ait accès à la mémoire tampon 16 du module de traitement en bande de base 7.

Dans le module de traitement en bande de base 7, chaque fois que l'un quelconque des démodulateurs 15 démodule un paquet, ce paquet est stocké avec des informations additionnelles, appelées métadonnées, dans la mémoire tampon 16. Les métadonnées comportent par exemple :

- un identifiant de canal radio,

- le rapport du signal sur le bruit moyen sur la longueur du paquet (en dB)

- le rapport du signal sur le bruit minimum sur la longueur du paquet (en dB)

- le rapport du signal sur le bruit maximum sur la longueur du paquet (en dB)

- l'intensité moyenne du signai sur ia durée du paquet (en dB)

- des données d'horodatage de début de paquet

- des valeurs de code de correction d'erreur,

- un identifiant du démodulateur

- une position de pic de corrélation

- le rapport du signal sur le bruit de la corrélation de détection

De façon analogue, le module de traitement en bande de base 7 permet de transmettre au module frontal radio 6 les données en provenance des équipements distants 5 à émettre par le module frontal radio 6. Un exemple de module de traitement en bande de base 7 pouvant être intégrée à la passerelle 3 est le processeur en bande de base SX1301 de Semtech®, une société des Etats Unis.

Le microcontrôleur 8 est connecté à l'ensemble des éléments de la passerelle 3 de manière à gérer la passerelle 3 et permettre le transfert de données entre le réseau sans fil local 1 et le réseau de communication étendu 2. En particulier, le microcontrôleur 8 permet de mettre en œuvre les différents processus de fonctionnement de la passerelle 3. Les programmes définissant les différents processus de fonctionnement de la passerelle 3 sont par exemple stockés dans la mémoire interne 9 de la passerelle. Ces processus de fonctionnement peuvent être de tout type permettant de gérer la passerelle 3, par exemple un processus de traitement des signaux de données reçus par la passerelle afin de les transmettre à leurs destinataire, un processus de synchronisation de la passerelle 3 à l'aide du GPS 11 fournissant des données de référence ou encore un processus de synchronisation des différents objets communicants 4 à l'aide de l'horloge 12.

L'interface utilisateur 10 comporte une pluralité de moyens d'entrée/sortie permettant de configurer la passerelle 3. Ces moyens d'entrée/sortie sont par exemple des connecteurs tels que des ports d'entrée ou de sortie donnant accès à la mémoire interne 9, des connectiques de type USB ou autre. L'interface utilisateur peut également comprendre des moyens d'interface homme/machine tels qu'un écran de contrôle, des lampes LED d'indication d'état de fonctionnement de la passerelle ou autre.

L'interface réseau 13 de la passerelle 3 permet de connecter la passerelle 3 aux équipements distants 5 via le réseau de communication étendu 2.

La passerelle 3 comporte par exemple une batterie (non représentée) permettant de l'alimenter.

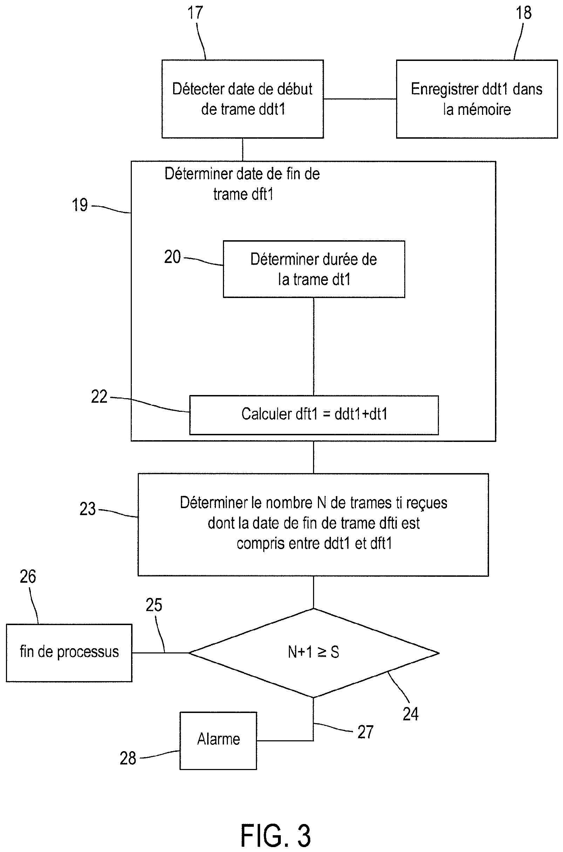

La figure 3 est un diagramme de fonctionnement d'un procédé de contrôle de la charge de la passerelle de la figure 2.

Comme expliqué ci-dessus, lorsque la passerelle 3 reçoit un signal de données depuis un objet communicant 4, le paquet correspondant est transmis à l'un des démodulateurs 15 du module de traitement en bande de base 7 pour être traité. Chaque paquet démodulé associé à des métadonnées et stocké dans la mémoire tampon 16 du module de traitement en bande de base 7 engendre l'exécution d'un procédé de contrôle de la charge de la passerelle 3 qui va maintenant être décrit en référence à la figure 3.

Lorsque le démodulateur détecte une date de début de trame ddt1 (étape 17), ladite date de début de trame ddt1 est enregistrée en tant que métadonnée dans la mémoire tampon 16 (étape 18). En outre, le microcontrôleur 8 lit la date de début de trame ddt1 et détermine une date de fin de trame dft1 correspondante (étape 19). Pour cela, le microcontrôleur 8 détermine la durée de la trame dt1 (étape 20) par tout moyen possible, une telle durée de la trame dt1 étant par exemple fournie par le démodulateur 15 en étant incluse dans les métadonnées. La date de fin de trame dft1 est calculée (étape 22) à partir de la durée de la trame dt1, selon la formule

$$dft1 = ddt1 + dt1 \text{ où } dt1 = \frac{\ell}{ddct1} \text{ où } \ell \text{ est la longueur}$$

*de la trame en bits et ddct1 est le débit de données du canal (en bits par secondes)*

Pour cela, le microcontrôleur 8 détermine la longueur de la trame I (en bits) et le débit de données du canal ddct1 par lequel a transité la trame. Ce débit de données du canal ddct1 est directement fourni par le démodulateur 15 en fonction de ses paramètres propres.

Dès lors que la date de fin de la trame dft1 est déterminée (étape 19), le microcontrôleur 8 détermine le nombre N de trames reçues par la passerelle 3 présentant une date de fin de trame comprise entre la date de début de trame ddt1 et la date de fin de trame dft1 (étape 23). Pour cela, le microcontrôleur 8 peut consulter les métadonnées stockées dans la mémoire tampon 16 du module de traitement en bande de base 7.

Le microcontrôleur 8 compare alors le nombre de trames N incrémenté de 1 avec un seuil S, égal par exemple au nombre M de démodulateurs 15 présents dans la passerelle 3 (étape 24). L'incrémentation de 1 du nombre N permet de prendre en compte la trame dont la réception (étape 17) de la date de début de trame ddt1 a engendré l'exécution du processus. Le nombre de démodulateurs 15 présents dans la passerelle est un nombre connu M qui est par exemple stocké dans la mémoire interne 9 de la passerelle 3.

Si ce nombre N+1 est strictement inférieur au nombre M de démodulateurs 15 présents dans la passerelle 3 (étape 25), alors le procédé se termine sans autre action de la part du microcontrôleur 8 (étape 26), la charge de la passerelle étant considérée comme non critique.

Si au contraire, le nombre N+1 est supérieur ou égal au nombre M de démodulateurs 15 présents dans la passerelle 3 (étape 27), le microcontrôleur 8 commande l'émission d'une alarme (étape 28). Une telle alarme peut être réalisée de toute façon adaptée, par exemple sous la forme de l'envoi d'un message à un serveur distant de gestion des passerelles 3, d'un signal lumineux, d'une alarme sonore à l'aide d'un haut-parleur intégré à l'interface utilisateur 10 de la passerelle 3 ou tout autre moyen adapté.

Lorsqu'une alarme est émise (étape 28), le personnel en charge de la gestion et/ou de la maintenance de la passerelle 3 est informé de la surcharge de la passerelle 3. Dès lors, plusieurs réponses sont possibles afin que la passerelle 3 ne reste pas en surcharge. Ainsi, il est possible d'ajouter physiquement des démodulateurs 15 dans la passerelle 3 afin d'augmenter sa capacité de traitement et donc d'augmenter le nombre seuil à partir duquel une alarme est émise. Une autre solution consiste à reprogrammer les objets communicants 4 afin de réduire le débit montant des objets communicants 4 et donc d'étaler dans le temps les dates de fin de trames reçues par certains démodulateurs 15 ou raccourcir les paquets émis par les objets communicants 4.

Le procédé de contrôle de la charge de la passerelle 3 tel que décrit ci-dessus est de préférence exécuté pour chaque nouvelle date de début de trame détectée. Un tel procédé de contrôle de la charge de la passerelle 3 permet une estimation simple et économique de la charge de la passerelle 3. En effet, ce procédé permet de déterminer en temps réel la charge des démodulateurs 15 tout en présentant un faible coût de calcul. Ce procédé de contrôle de la charge de la passerelle 3 peut donc être mis en œuvre dans la passerelle 3 sans risque de dégrader ses performances.

Le nombre seuil de déclenchement de l'alarme, c'est-à-dire le nombre S auquel est comparé le nombre N+1 à l'étape 24, peut être stocké dans la mémoire interne 9 et représenter une autre valeur que le nombre de démodulateurs 15 présents dans la passerelle 3. Par exemple il peut être prévu que ce nombre seuil correspond au nombre de démodulateurs moins 2, permettant ainsi de générer une alarme préalablement au moment où l'ensemble des démodulateurs 15 sont saturés.

La figure 4 est un graphique illustrant un exemple de pluralité de trames reçues par la passerelle 3 de la figure 2 sur une période donnée. Sur ce diagramme, l'axe des abscisses représente le temps et l'axe des ordonnées représente différents démodulateurs 15 traitant des signaux de données reçus par la passerelle 3 au cours du temps.

On s'intéresse sur ce graphique au procédé de contrôle de la charge de la passerelle 3 exécuté suite au traitement d'une trame t3 par un démodulateur M3 de la passerelle 3 La trame t3 présente une date de début de trame ddt3 et une date de fin de trame dft3 stockées dans la mémoire tampon 16 de l'interface graphique 7 ou déterminées par le microcontrôleur 8 à l'aide des métadonnées associées au paquet correspondant à la trame t3. En outre, l'exécution du processus de contrôle de charge de la passerelle décrit en regard de la figure 3 comporte l'étape de détermination du nombre N de trame dont la date de fin de trame est comprise entre la date de début de trame ddt3 et la date de fin de trame dft3. Comme illustré sur la figure 4, seules les trames t1 et t2 présentent une date de fin de trame respectivement dft1 et dft2 postérieure à la date de début de trame ddt3 et antérieure à la date de fin de trame dft3. En effet, les autres trames présentent une date de fin de trame postérieure à la date de fin de trame dft3. Ainsi, dans le cas présent, le procédé de contrôle de la charge de la passerelle exécuté à la suite du traitement de la trame t3 par le démodulateur M3 ne génère pas d'alarme, le nombre N+1 de trames présentant une date de fin de trame comprise entre la date de début de trame ddt3 et ia date de fin de trame ddf3, soit N=3, est inférieur au nombre de démodulateurs M, six dans le cas illustré sur cette figure 4.

Certains des éléments représentés, notamment les composants de la passerelle, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

L'usage du verbe « comporter », « comprendre » ou inclure et de ses formes conjuguées n'exclut pas la présence d'autres éléments ou d'autres étapes que ceux énoncés dans une revendication.

Dans les revendications, tout signe de référence entre parenthèse ne saurait être interprété comme une limitation de la revendication.

**Revendications**

1. Procédé de contrôle de la charge d'une passerelle (3) de concentration de données pour un réseau de communication sans fil (1), le procédé étant executé par la passerelle et comportant

   - recevoir une pluralité de signaux de données depuis une pluralité de dispositifs clients distants,
   - fournir une date de début de communication de chaque signal de données reçu,
   - sélectionner un signal de données reçu,
   - déterminer une date de fin de communication de chaque signal de données reçu (19),
   - déterminer un nombre des signaux de données reçus par la passerelle qui présentent une date de fin de communication comprise entre une date de début de communication du signal de données sélectionné et une date de fin de communication du signal de données sélectionné (23),
   - comparer ledit nombre des signaux de données à un nombre seuil (24) et
   - émettre un signal d'alarme (28) en réponse à la détection que ledit nombre de signaux de données est supérieur au nombre seuil (27).

2. Procédé de contrôle selon la revendication 1, dans lequel la passerelle comporte une pluralité de démodulateurs (15), chaque démodulateur (15) de la passerelle (3) étant configuré pour démoduler des signaux de données reçus par la passerelle (3), le procédé comportant en outre une étape de démodulation de la pluralité de signaux de données par les démodulateurs (15), dans lequel le nombre seuil correspond au nombre de démodulateurs de la passerelle (3).

3. Procédé de contrôle selon la revendication 2, dans lequel la passerelle comporte une interface de communication radio (6) configurée pour recevoir la pluralité de signaux de données sans fil, l'interface de communication radio (6) étant connectée aux démodulateurs (15), le procédé comportant une étape de transmission de chacun des signaux de données reçus par l'interface de communication (6) à un démodulateur (15) respectif.

4. Procédé de contrôle selon la revendication 3, dans lequel la passerelle (3) comporte en outre une antenne de réception des signaux.

5. Procédé de contrôle selon la revendication 4, dans

13  EP 3 504 932 B1  14

lequel l'antenne de réception est configurée pour recevoir des signaux de données à une fréquence comprise dans le groupe de fréquences de 433MHz, 868MHz et 915MHz.

6. Procédé de contrôle selon l'une des revendications 1 à 5, dans lequel chaque signal de données est une trame d'un protocole de communication choisi parmi la technologie LoRa, la technologie Sigfox et la technologie WM-BUS.

7. Procédé de contrôle selon la revendication 6, dans lequel déterminer la date de fin de communication de chaque signal de données (19) reçu comporte, pour chaque signal de données reçu :

    - Déterminer une longueur de la trame correspondant audit signal de données (20) reçu, et
    - Calculer la date de fin de communication de la trame correspondant audit signal de données (22) reçu en fonction de ladite longueur de trame et d'un débit de données d'un canal radio par lequel ledit signal de données a été reçu.

8. Procédé de contrôle selon l'une des revendications 1 à 7, dans lequel la passerelle (3) comporte une horloge interne (12) apte à fournir une donnée d'horodatage correspondant à la date de début de communication de chaque signal de données reçu.

9. Passerelle de concentration de données pour un réseau de communication sans fil (1) comportant un ensemble de dispositifs clients (4) distants qui sont des émetteurs de signaux de données, la passerelle (3) comportant :

    - une interface de communication radio (6) configurée pour recevoir des signaux de données radio depuis l'ensemble des dispositifs clients (4),
    - une pluralité de démodulateurs (15) configurés pour démoduler les signaux de données reçus par l'interface de communication (6),
    - une unité de contrôle (8) configurée pour exécuter le procédé de contrôle selon l'une des revendications 1 à 8.

10. Passerelle de concentration selon la revendication 9, comportant en outre une interface réseau (13) connectée à un réseau distant (2) et configurée pour transmettre les signaux de données démodulés.

11. Passerelle de concentration selon l'une des revendications 9 à 10, la passerelle comportant en outre une alarme configurée pour envoyer un signal de données d'alarme à un dispositif de gestion de passerelle connecté à la passerelle.

**Patentansprüche**

1. Verfahren zur Steuerung der Last eines Datenkonzentrationsgateways (3) für ein Drahtloskommunikationsnetzwerk (1), wobei das Verfahren von dem Gateway durchgeführt wird und umfasst:

    - das Empfangen einer Vielzahl von Datensignalen von einer Mehrzahl von entfernten Client-Geräten,
    - das Bereitstellen eines Anfangszeitpunkts der Kommunikation für jedes empfangene Datensignal,
    - das Wählen eines empfangenen Datensignals,
    - das Bestimmen eines Endzeitpunkts der Kommunikation für jedes empfangene Datensignal (19),
    - das Bestimmen einer Anzahl der Datensignale, die von dem Gateway empfangen wurden und die einen Endzeitpunkt der Kommunikation aufweisen, der zwischen einem Anfangszeitpunkt der Kommunikation des gewählten Datensignals und einem Endzeitpunkt der Kommunikation des gewählten Datensignals (23) liegt,
    - das Vergleichen der Anzahl der Datensignale mit einer Schwellen-Anzahl (24) und
    - das Ausgeben eines Alarmsignals (28) in Reaktion auf die Detektion, dass diese Anzahl von Datensignalen über der Schwellen-Anzahl (27) liegt.

2. Verfahren zur Steuerung nach Anspruch 1, wobei das Gateway eine Mehrzahl von Demodulatoren (15) umfasst, wobei jeder Demodulator (15) des Gateways (3) ausgebildet ist zum Demodulieren der von dem Gateway (3) empfangenen Datensignale, wobei das Verfahren ferner einen Schritt zum Demodulieren der Vielzahl von Datensignalen durch die Demodulatoren (15) umfasst, wobei die Schwellen-Anzahl der Anzahl von Demodulatoren (15) des Gateways (3) entspricht.

3. Verfahren zur Steuerung nach Anspruch 2, wobei das Gateway eine Funkkommunikationsschnittstelle (6) hat, die konfiguriert ist für den drahtlosen Empfang der Vielzahl von Datensignalen, wobei die Funkkommunikationsschnittstelle (6) mit den Demodulatoren (15) verbunden ist, wobei das Verfahren einen Schritt zur Übertragung jedes der empfangenen Datensignale über die Funkkommunikationsschnittstelle (6) zu einem betreffenden Demodulator (15) umfasst.

4. Verfahren zur Steuerung nach Anspruch 3, wobei das Gateway (3) ferner eine Signalempfangsantenne aufweist.

5. Verfahren zur Steuerung nach Anspruch 4, wobei die Empfangsantenne konfiguriert ist für den Empfang der Datensignale mit einer Frequenz, die in der Frequenzgruppe von 433 MHz, 868 MHz und 915 MHz enthalten ist.

6. Verfahren zur Steuerung nach einem der Ansprüche 1 bis 5, wobei jedes Datensignal ein Rahmen eines Kommunikationsprotokolls ist, das ausgewählt ist aus der LoRa-Technologie, der Sigfox-Technologie und der WM-BUS-Technologie.

7. Verfahren zur Steuerung nach Anspruch 6, wobei das Bestimmen des Anfangszeitpunkts der Kommunikation jedes empfangenen Datensignals (19) für jedes empfangene Datensignal umfasst:

- das Bestimmen einer Länge des Rahmens entsprechend dem empfangenen Datensignal (20) und
- das Berechnen des Endzeitpunkts der Kommunikation des Rahmens entsprechend dem empfangenen Datensignal (22) in Abhängigkeit von der Länge des Rahmens und einer Datenrate eines Funkkanals, über welchen das Datensignal empfangen wurde.

8. Verfahren zur Steuerung nach einem der Ansprüche 1 bis 7, wobei das Gateway (3) einen internen Taktgeber (12) hat, der geeignet ist zum Liefern von Zeitstempel-Daten entsprechend dem Anfangszeitpunkt der Kommunikation jedes empfangenen Datensignals.

9. Datenkonzentrationsgateway für ein Drahtloskommunikationsnetzwerk (1), das eine Gruppe von entfernten Client-Geräten (4) enthält, welche Sender von Datensignalen sind, wobei das Gateway (3) umfasst:

- eine Funkkommunikationsschnittstelle (6), die konfiguriert ist für den Empfang von Funkdatensignalen von der Gruppe von Client-Geräten (4),
- eine Mehrzahl von Demodulatoren (15), die ausgebildet sind zum Demodulieren der über die Kommunikationsschnittstelle (6) empfangenen Datensignale,
- eine Steuereinheit (8), die für die Durchführung des Steuerungsverfahrens nach einem der Ansprüche 1 bis 8 konfiguriert ist.

10. Konzentrationsgateway nach Anspruch 9, ferner umfassend eine Netzwerkschnittstelle (13), die mit einem entfernten Netzwerk (2) verbunden ist und konfiguriert ist für die Übertragung der demodulierten Datensignale.

11. Konzentrationsgateway nach einem der Ansprüche 9 bis 10, wobei das Gateway ferner eine Alarmeinrichtung aufweist, die ausgebildet ist zum Senden eines Alarm-Datensignals zu einer mit dem Gateway verbundenen Einrichtung zum Verwalten des Gateways.

**Claims**

1. A method for controlling the load of a data concentration gateway (3) for a wireless communication network (1), the method being run by the gateway and comprising:

- receiving a plurality of data signals from a plurality of remote client devices,
- providing a communication start date for each data signal received,
- selecting a received data signal,
- determining a communication end date for each data signal received (19),
- determining a number of data signals received by the gateway that have a communication end date that is between a communication start date of the selected data signal and a communication end date of the selected data signal (23),
- comparing said number of data signals with a threshold number (24), and
- transmitting an alarm signal (28) in response to the detection that said number of data signals is greater than the threshold number (27).

2. The control method as claimed in claim 1, wherein the gateway comprises a plurality of demodulators (15), each demodulator (15) of the gateway (3) being configured to demodulate data signals received by the gateway (3), the method further comprising a step of demodulating the plurality of data signals by the demodulators (15), wherein the threshold number corresponds to the number of demodulators in the gateway (3).

3. The control method as claimed in claim 2, wherein the gateway comprises a wireless communication interface (6) configured to receive the plurality of wireless data signals, the wireless communication interface (6) being connected to the demodulators (15), the method comprising a step of transmitting each of the data signals received by the communication interface (6) to a respective demodulator (15).

4. The control method as claimed in claim 3, wherein the gateway (3) further comprises an antenna for receiving the signals.

5. The control method as claimed in claim 4, wherein the receiving antenna is configured to receive data signals at a frequency within the frequency group of 433 MHz, 868 MHz and 915 MHz.

**6.** The control method as claimed in any of claims 1 to 5, wherein each data signal is a frame of a communication protocol selected from LoRa technology, Sigfox technology and WM-BUS technology.

**7.** The control method as claimed in claim 6, wherein determining the communication end date of each received data signal (19) comprises, for each received data signal:

- Determining a length of the frame corresponding to said received data signal (20), and
- Calculating the communication end date of the frame corresponding to said received data signal (22) as a function of said frame length and of a data rate of a wireless channel through which said data signal has been received.

**8.** The control method as claimed in any of claims 1 to 7, wherein the gateway (3) comprises an internal clock (12) capable of providing a time stamp data element corresponding to the communication start date of each data signal received.

**9.** A data concentration gateway for a wireless communication network (1) comprising a set of remote client devices (4) which are data signals transmitters, the gateway (3) comprising:

- a wireless communication interface (6) configured to receive wireless data signals from the set of client devices (4),
- a plurality of demodulators (15) configured to demodulate the data signals received by the communication interface (6),
- a control unit (8) configured to execute the control method as claimed in any of claims 1 to 8.

**10.** The concentration gateway as claimed in claim 9, further comprising a network interface (13) connected to a remote network (2) and configured to transmit the demodulated data signals.

**11.** The concentration gateway as claimed in any of claims 9 to 10, the gateway further comprising an alarm configured to send an alarm data signal to a gateway management device connected to the gateway.

FIG. 1

FIG. 4

EP 3 504 932 B1

```
        ┌─────────────────────────────────────┐
6 ──    │ Antenne(s) radio (433MHz/ 868MHz/   │
        │ 915MHz) et étage d'entrée (filtre, ampli) │
        └─────────────────────────────────────┘
```

FIG. 2

17

Détecter date de début
de trame ddt1

18

Enregistrer ddt1 dans
la mémoire

19

Déterminer date de fin de
trame dft1

20

Déterminer durée de
la trame dt1

22

Calculer dft1 = ddt1+dt1

23

Déterminer le nombre N de trames ti reçues
dont la date de fin de trame dfti est
compris entre ddt1 et dft1

26

25

fin de processus

N+1 ≥ S

24

27

Alarme

28

FIG. 3

## RÉFÉRENCES CITÉES DANS LA DESCRIPTION

**Documents brevets cités dans la description**

- US 2015327152 A1